# EUROPÄISCHE PATENTSCHRIFT

(11) **EP 2 002 723 B1**
(45) Veröffentlichungstag und Bekanntmachung des Hinweises auf die Patenterteilung: **11.05.2011**
(21) Anmeldenummer: 07011420.2
(22) Anmeldetag: 11.06.2007
(51) Int. Cl.: A21B 3/15, A21C 13/00

(54) **Gärgutträger mit Einlage sowie Verfahren zum Beschicken eines Gärgutträgers mit einer Einlage**
Carrier to rise dough products with insert and method for placing an insert in such a carrier
Support pour produits à lever avec pièce rapportée et procédé pour poser une pièce rapportée dans un tel support

(43) Veröffentlichungstag der Anmeldung: 17.12.2008
(73) Patentinhaber: CIC Concept Industrie Consult GmbH, 64297 Darmstadt (DE)
(72) Erfinder: Kunsch, Oswald, 64665 Alsbach-Hähnlein (DE); Michaelsen, Uwe, 64331 Weiterstadt (DE)
(74) Vertreter: Quermann, Helmut

(56) Entgegenhaltungen:
- WO-A2-03/068492
- DE-C- 580 576
- DE-U1- 8 529 078
- DE-U1- 8 808 319
- DE-U1- 9 400 814
- DE-U1- 29 518 901
- DE-U1- 29 908 136
- NL-C1- 1 011 927
- US-A- 5 286 016
- US-A- 5 520 945
- US-B1- 6 279 469

## Beschreibung

Die Erfindung betrifft einen Gärgutträger mit Einlage sowie ein Verfahren zum Beschicken eines Gärgutträgers mit einer Einlage.

Seit Jahrzehnten finden Gärgutträger bei Bäckereien Verwendung. Sie dienen der Aufnahme von gärenden Teiglingen, die auf in den Gärgutträger eingelegten blattförmigen Einlagen aufliegen. Der Boden des Gärgutträgers ist in aller Regel gelocht ausgebildet. Der Gärgutträger ist vorzugsweise kastenförmig gestaltet.

Im Zuge der Massenherstellung von Lebensmitteln ist die Einhaltung der Lebensmittelhygiene von besonderer Bedeutung. Hierbei ist insbesondere eine gesundheitliche Gefahr für den Verbraucher, insbesondere aufgrund von Schimmelpilzbildung, Bakterien usw., auszuschließen.

Vor diesem Hintergrund sind in der Vergangenheit die vielfältigsten Versuche unternommen worden, den Gärprozess bei optimalen Hygienebedingungen ablaufen zu lassen. Dies ist bislang nicht gelungen, weil die Einlagen der Gärgutträger selbst bei Anwendung erheblicher Reinigungsmaßnahmen, Schimmelbildung aufweisen. In der bisherigen Praxis ist es die Regel, dass über lange Zeiträume, somit eine Vielzahl von Umläufen des Gargutträgers verwendet werden, mit den genannten hygienischen Nachteilen.

Im DE-GM 88 08 319 ist ein Gärgutträger für Teiglinge beschrieben, wobei der Gärgutträger mit einer Einlage, die als Tuch ausgebildet ist, zusammenwirkt. Das Tuch ist mit dem Boden des Trägers lösbar verbunden. Konkret weist der Gärgutträger einen als Siebblech gebildeten Boden auf, dessen Oberfläche mit dem Tuch bespannt ist, bei dem es sich z. B. um ein Moltontuch, ein Nesseltuch, ein Halbleinentuch oder um ein Vlies- oder Filzmaterial handeln kann. Der Boden des Gärgutträgers ist an seinen Kanten mit aufsteckbaren Klemmleisten versehen, die das Tuch mit dem Boden lösbar verbinden. - Nachteilig ist bei diesem Gärgutträger mit Einlage, dass separate Mittel, vorstehend die Klemmleisten, zum Verbinden der Einlage mit dem Gärgutträger erforderlich sind. Dieses komplizierte Positionieren der Einlage führt dazu, dass die Einlage nur nach einer Vielzahl von Umläufen des Gärgutträgers gewechselt wird und demzufolge die hygienische Gefährdung der Verbraucher infolge Schimmelbildung und dergleichen evident ist.

In der DE 20 2006 001 783 U1 ist eine besondere Gestaltung des Gärgutträgers, der auch als Sturzkasten bezeichnet wird, für Teiglinge beschrieben. Dort ist ausgeführt, dass der Boden des Gärgutträgers innenseitig mit einer Einlage aus einem Gewebematerial belegt ist, die beispielsweise ein feinmaschiges Kunststoffgewebe ist. Im Bereich abgewandter Stirnseiten wird diese Einlage mittels zweier Rundstangen am Boden des Gärgutträgers positioniert, so dass die Einlage sich nicht ungewollt verschieben kann.

Gattungsbildend ist für den Gärgutträger mit Einlage der aus dem Internetauftritt der Möller Bäckereisysteme, Windmühlenstraße 53, 50129 Bergheim-Büsdorf bekannt gewordene Gärgutträger mit blattförmiger Einlage, wobei der Gärgutträger mit einem Boden versehen ist, und die in den Gärgutträger eingelegte Einlage auf dem Boden aufliegt, zur Aufnahme des Gärguts auf der Einlage. Diese in den Gärgutträger eingelegte Einlage ist als Polyestertuch ausgebildet, das entweder lose auf dem Boden aufliegt oder geringfügig mittels Klettband an den kurzen Seiten des Tuches am Boden des Gärgutträgers fixiert wird. - Ein solches Polyestertuch weist ein relativ hohes Flächengewicht auf und ist flexibel. Es wird deshalb manuell in den Gärgutträger eingelegt und ist nur mit einem sehr hohen Aufwand für eine automatische Zuführung zum Gärgutträger geeignet. Abgesehen hiervon handelt es sich bei dem Polyestertuch nicht um einen Einmalartikel; in der Praxis wird das Polyestertuch nur gelegentlich gereinigt.

Bei bekannten Gärgutträgern mit Einlage findet kein automatisches Zuführen der Einlage zum Gärgutträger statt.

In der DE 580 576 C ist ein Verfahren zur Herstellung von Obstkuchen und ähnlichen Kuchen mittels eines in ein Backblech eingesetzten, die Ränder abdeckenden Holzrahmens, der die Einwirkung der Backhitze auf das Backgut dämpft, bekannt. Es wird die Obstmasse nach Abdeckung des Backblechbodens durch eine in den Holzrahmen passende, mit einem Papierblatt überdeckte Sperrholzplatte in den Rahmen eingefügt, glattgestrichen und durch eine Blätterteigdecke abgedeckt. Hierauf wird der Backprozess durchgeführt und nach dem Backprozess das Backblech samt dem Kuchen umgestülpt, das Backblech abgehoben, die Sperrholzplatte samt dem Papierbogen aus dem Rahmen entfernt und durch eine Mürbeteigdecke ersetzt. Darauf wird der Kuchen zusammen mit dem Holzrahmen wieder zurückgekippt, die Blätterteigdecke glasiert und der Holzrahmen entfernt.

In der DE 94 00 814 U1 ist eine blattförmige Backunterlage beschrieben, im allgemeinen Sprachgebrauch auch als "Backpapier" bezeichnet. Diese Backunterlage ist mehrschichtig gestaltet. Sie weist eine Trägerschicht auf, die einseitig mit einer Antihaftbeschichtung versehen ist. Diese Antihaftbeschichtung besteht insbesondere aus organischen Polymeren, fluorhaltigen Verbindungen oder anorganischen Verbindungen. Die Trägerschicht ist auf der der Antihaftbeschichtung gegenüberliegenden Seite mit einer Beschichtung aus einem saugfähigem Material versehen. Zwischen der Trägerschicht und der Beschichtung ist ein Haftvermittler vorgesehen, der für einen festen Verbund zwischen der Trägerschicht einerseits und der Beschichtung aus saugfähigem Material andererseits sorgt. Die Beschichtung aus saugfähigem Material ist z. B. ein saugfähiges Papier, ein Vlies aus Zellulose, Baumwolle, Faser oder dergleichen synthetischen Fasern und ihren Mischformen. Sowohl die Trägerschicht als auch die Antihaftbeschichtung und die Beschichtung aus saugfähigem Material sind bis 220°C temperaturbeständig. Das saugfähige Material trägt dazu bei, dass die Backunterlage bei der Zubereitung von beispielsweise Fett oder Feuchtigkeit abgebenden Speisen das Fett oder die Feuchtigkeit aufnehmen und somit die Verunreinigung eines Backbleches, eines Rostes oder dergleichen verhindern kann.

Gärgutträger für gärende Teiglinge sind ferner aus der DE 85 29 078 U und der DE 295 18 901 U bekannt.

Aufgabe der vorliegenden Erfindung ist es, einen Gärgutträger mit besonderer Einlage zu schaffen, die unter hygienischen Gesichtspunkten absolut unbedenklich ist und die unkompliziert dem Gärgutträger zugeführt werden und in diesem positioniert werden kann. Es ist ferner Aufgabe der vorliegenden Erfindung ein Verfahren zum Beschicken eines Gärgutträgers mit einer Einlage zu schaffen, das besonders einfach ausgebildet ist.

Zur Lösung dieser Aufgabe schlägt die Erfindung einen Gärgutträger mit blattförmiger Einlage, wobei der Gärgutträger für gärende Teiglinge mit einem Boden versehen ist und die in den Gärgutträger eingelegte Einlage auf dem Boden aufliegt, zur Aufnahme des Gärguts auf der Einlage vor, wobei erfindungsgemäß vorgesehen ist, dass die Einlage aus Papier besteht, wobei das Papier luftdurchlässig, saugfähig und nassfest ist, sowie die Einlage ein Einmalartikel ist und lose auf dem Boden aufliegt, wobei das spezifische Gewicht der Einlage 30 bis 100 g/m² beträgt.

Das erfindungsgemäß vorgesehene besondere Material - Papier - aus dem die Einlage besteht, ermöglicht es insbesondere die Einlage als Einmalartikel auszuführen. Demzufolge wird pro Gärzyklus, d. h. pro Belegung des Gärgutträgers mit Gärgut, die Einlage aus Papier nur einmal verwendet und dann verworfen. Selbstverständlich besteht die Möglichkeit, die Einlage auch mehrfach zu verwenden. Auf jeden Fall wird die Einlage nicht gereinigt bzw. gesäubert, sondern nach gewissen Zyklen verworfen.

Die Verwendung des Materials Papier als Einlage löst sich von jahrzehntelangen Vorstellungen der Fachkreise im Zusammenhang mit der Beschaffenheit und Ausbildung von Einlagen bei Gärgutträgern. Es ist nunmehr nicht mehr erforderlich, die Einlage kompliziert im Gärgutträger zu montieren und nach gewissen Zyklen zu demontieren, um die Einlage dann zu säubern bzw. zu reinigen. Aufgrund der Erfindung ist es nur noch erforderlich, die Einlage in den Gärgutträger einzulegen und nach dem Gärvorgang gegebenenfalls eine neue Einlage einzulegen.

Die Einlage aus Papier wird lose in den Gärgutträger eingelegt, somit lose auf den Boden aufgelegt. Dies stellt die einfachste Anordnung der Einlage im Gärgutträger dar. Ist es gewünscht, dass die Einlage, beim Stürzen des Gärgutträgers im Anschluss an den Gärvorgang, nicht verrutscht oder mit dem Gärgut zusammen ausgeschüttet wird, kann es vorteilhaft sein, die Einlage aus Papier auf der dem Boden des Gärgutträgers zugewandten Seite mit einer Haftbeschichtung zu versehen, die eine gewisse Haftung zwischen der Einlage und dem Boden gewährleistet. Es reicht aus, wenn die Haftbeschichtung im Bereich der Schmalseiten der Einlage vorgesehen ist.

Der Gärgutträger ist insbesondere in Art aus dem Stand der Technik bekannter Gärgutträger ausgebildet, somit mit einem Boden, Seiten- und Stirnwänden. Der Boden ist insbesondere gelocht. Der Gärgutträger besteht vorzugsweise aus Holz, Kunststoff oder Metall, beispielsweise Aluminium, oder aus Mischformen.

Das Papier ist saugfähig und nassfest. Das Papier kann damit Feuchtigkeit aufnehmen und halten und trägt somit den Gegebenheiten beim Gärprozess Rechnung. Die Nassfestigkeit gewährleistet, dass nach Abschluss des Gärens des Teiglings und dem Stürzen des Gärgutträgers keine am Teigling haftende Papierbestandteile aus der papierenden Einlage herausgerissen werden bzw. keine Papierfaserreste am Teigling kleben bleiben. Das Papier ist Lebensmittel unbedenklich. Das Papier ist luftdurchlässig und damit atmungsaktiv und porös. Das Papier kann maschinell gut vereinzelt und gut transportiert werden, insbesondere mittels verfahrbaren Saughebern.

Das spezifische Gewicht des Papiers ist relativ gering, beträgt 30 bis 100 g/m², vorzugsweise 50 bis 80 g/m², insbesondere 60 bis 70 g/m². Bei diesem spezifischen Gewicht des Papiers haben sich beste Versuchsergebnisse bestätigt.

Es wird als besonders vorteilhaft angesehen, wenn das Papier ein Krepp-Papier ist. Die Rauhigkeit des Krepp-Papiers ergibt die besten Ergebnisse während des Gärprozesses.

Die Materialbeschaffenheit der Einlage, somit die Beschaffenheit der Einlage aus Papier, ermöglicht es, nunmehr das Verfahren zum Beschicken des Gärgutträgers mit der Einlage zu automatisieren. Selbstverständlich kann das Einlegen der Einlage in den Gärgutträger auch manuell erfolgen. Vorzugsweise laufen die Verfahrensschritte teilweise oder vollständig automatisch ab.

Das erfindungsgemäße Verfahren zum Beschicken des Gärgutträgers für gärende Teiglinge mit der Einlage ist durch folgende Verfahrensschritte gekennzeichnet:
- Zuführen eines Gärgutträgers,
- Entnehmen der aus luftdurchlässigem, saugfähigem und nassfestem Papier bestehenden Einlage mit einem spezifischen Gewicht von 30 bis 100 g/m² von einem Stapel gestapelter Einlagen oder Schneiden einer aus luftdurchlässigem, saugfähigem und nassfestem Papier bestehenden Einlage mit einem spezifischen Gewicht von 30 bis 100 g/m² von einer Papierrolle,
- loses Einlegen der Einlage in den Gärgutträger.

In aller Regel wird der Verfahrensablauf so vonstatten gehen, dass der Gärgutträger vor dem Zuführen vereinzelt wird. Dies erfolgt insbesondere maschinell. Auch das Einlegen der Einlage in den Gärgutträger erfolgt vorzugsweise automatisch. Es ist insbesondere daran gedacht, dass die Einlage mittels eines Saughebers vom Stapel gestapelter Einlagen entnommen und in den Gärgutträger eingelegt wird. Für den Fall, dass die Einlagen nicht, wie vorstehend genannt, gestapelt sind, sondern in Rollenform vorliegen, wird es als besonders vorteilhaft angesehen, wenn die Einlage im Fluss, d. h. bei einer Relativbewegung von Einlage und Gärgutträger, in den Gärgutträger eingelegt wird. Hierbei kann die Einlage nach oder beim Einlegen von der Papierrolle abgeschnitten werden.

An den Vorgang des Einlegens der Einlage in den Gärgutträger schließt sich in aller Regel unmittelbar die Beladung des Gärgutträgers mit Gärgut an. Insofern wird der Gärgutträger nach dem Einlegen der Einlage der Beladung mit Gärgut zugeführt.

Weitere Merkmale der Erfindung sind in den Unteransprüchen, der Beschreibung der Figuren und den Figuren selbst dargestellt.

Eine bevorzugte Ausführungsform wird nachfolgend unter Hinweis auf die Zeichnung näher erläutert. Es zeigt:
- Figur 1: eine räumliche Ansicht eines Gärgutträgers, schräg von oben ge- sehen,
- Figur 2: die räumliche Ansicht des Gärgutträgers gemäß Figur 1, wobei in den Gärgutträger eine Einlage aus Papier eingelegt ist.

Der Gärgutträger 1 ist kastenförmig ausgebildet und weist einen gelochten Boden 2, zwei parallel zueinander angeordnete gelochte Seitenwände 3 und zwei senkrecht zu diesen angeordnete, gleichfalls parallel zueinander positionierte Stirnwände 4 auf, die nicht gelocht sind. Der Gärgutträger 1 besteht beispielsweise aus Aluminium und ist stapelbar.

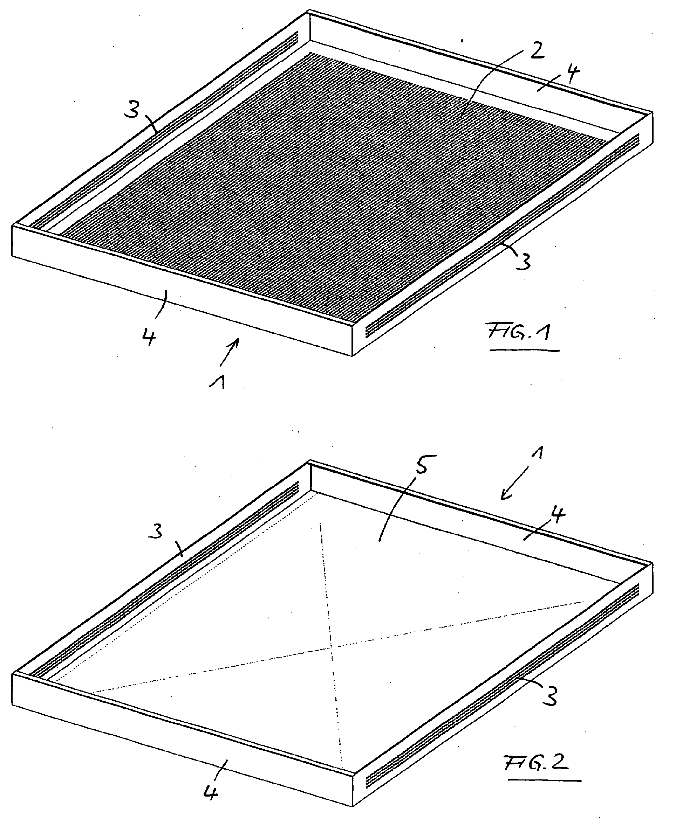

Der Boden ist rechteckig und weist eine Größe von 80 x 60 cm auf. - Die insoweit beschriebene Gestaltung des Gärgutträgers 1 ergibt sich aus der Figur 1.

Der Figur 2 ist zu entnehmen, dass auf den Gärgutträger 1 die blattförmige Einlage 5 aufgelegt ist, die aus Papier besteht. Die Einlage ist rechteckig und weist eine Größe von 78 x 58 cm auf.

Bei der Einlage 5 aus Papier handelt es sich um ein Krepp-Papier mit einem Gewicht von 60 bis 70 g/m².

Das Papier ist saugfähig und nassfest sowie Lebensmittel unbedenklich. Es ist ferner luftdurchlässig und damit atmungsaktiv.

Das Verfahren zum Beschicken des Gärgutträgers 1 mit der Einlage 5 aus Papier erfolgt beispielsweise gemäß folgender Schritte, jeweils manuell oder automatisch:
- Der Gärgutträger 1 wird vereinzelt.
- Der Gärgutträger 1 wird dem Arbeitsplatz zugeführt.
- Die Einlage 5 wird von einem Stapel entnommen oder von einer Rolle geschnitten.
- Die Einlage 5 wird in den Gärgutträger 1 eingelegt (z. B. mittels Saugheber) oder von der Rolle (im Fluss) in den Gärgutträger 1 eingelegt. Wird im Fluss eingelegt, d. h. Papier über den vorbeifahrenden Gärgutträger 1 abgerollt, erfolgt eventuell erst nach bzw. beim Einlegen das Abschneiden der Einlage 5.
- Der Gärgutträger wird dem nächsten Prozessschritt, nämlich der Beladung mit Teiglingen, zugeführt.

Bei der Einlage 5 aus Papier handelt es sich vorzugsweise um einen Einmalartikel. Nach jedem Gärprozess wird somit die Einlage 5 verworfen. Dies gewährleistet höchste Anforderungen an die Hygiene es Teiglings. Es ist durchaus im Rahmen der Erfindung, die Einlage 5 für mehrere Gärprozesse zu verwenden und sie mit geeigneten Messmethoden nach jedem Gärprozess hinsichtlich der Hygieneanforderung zu prüfen. Nach den diversen Prozesszyklen wird die Einlage 5 aus Papier verworfen.

## Patentansprüche

1. Gärgutträger (1) für gärende Teiglinge mit blattförmiger Einlage (5), wobei der Gärgutträger (1) mit einem Boden (2) versehen ist und die in den Gärgutträger (1) eingelegte Einlage (5) auf dem Boden (2) aufliegt, zur Aufnahme des Gärguts auf der Einlage (5), **dadurch gekennzeichnet, dass** die Einlage (5) aus Papier besteht, wobei das Papier luftdurchlässig, saugfähig und nassfest ist, sowie die Einlage (5) ein Einmalartikel ist und lose auf dem Boden (2) aufliegt, wobei das spezifische Gewicht der Einlage (5) 30 bis 100 g/m² beträgt.

2. Gärgutträger mit Einlage nach Anspruch 1, **dadurch gekennzeichnet, dass** die auf dem Boden (2) aufliegende Einlage (5) auf ihrer Unterseite in Teilbereichen, insbesondere Randbereichen mit Mitteln zum rutschsicheren Positionieren mit der Einlage (5) bezüglich des Bodens (2) versehen ist, insbesondere die Einlage (5) auf ihrer Unterseite mit einer Haftbeschichtung versehen ist.

3. Gärgutträger mit Einlage nach Anspruch 1 oder 2, **dadurch gekennzeichnet, dass** das spezifische Gewicht der Einlage (5) 50 bis 80 g/m², insbesondere 60 bis 70 g/m² beträgt.

4. Gärgutträger mit Einlage nach einem der Ansprüche 1 bis 3, **dadurch gekennzeichnet, dass** das Papier Lebensmittel unbedenklich ist.

5. Gärgutträger mit Einlage nach einem der Ansprüche 1 bis 4, **dadurch gekennzeichnet, dass** das Papier ein Krepp-Papier ist.

6. Gärgutträger mit Einlage nach einem der Ansprüche 1 bis 5, **dadurch gekennzeichnet, dass** der Boden (2) rechteckig ist und die Abmessungen der Einlage (5) im Wesentlichen den Innenabmessungen des Kastens im Bereich des Bodens (2) entsprechen.

7. Verfahren zum Beschicken eines Gärgutträgers (1) für gärende Teiglinge mit einer Einlage (5), **gekennzeichnet durch** folgende Verfahrensschritte:
- Zuführen eines Gärgutträgers (1),
- Entnehmen einer aus luftdurchlässigem, saugfähigem und nassfestem Papier bestehenden Einlage (5) mit einem spezifischen Gewicht von 30 bis 100 g/m² von einem Stapel gestapelter Einlagen oder Schneiden einer aus luftdurchlässigem, saugfähigem und nassfestem Papier bestehenden Einlage (5) mit einem spezifischem Gewicht von 30 bis 100 g/m² von einer Papierrolle,
- loses Einlegen der Einlage (5) in den Gärgutträger (1).

8. Verfahren nach Anspruch 7, **dadurch gekennzeichnet, dass** die Verfahrensschritte teilweise oder vollständig automatisch ablaufen.

9. Verfahren nach Anspruch 7 oder 8, **dadurch gekennzeichnet, dass** der Gärgutträger (1) vor dem Zuführen vereinzelt wird.

10. Verfahren nach Ansprüche 7 bis 9, **dadurch gekennzeichnet, dass** die Einlage (5) mittels eines Saughebers vom Stapel gestapelter Einlagen entnommen und in den Gärgutträger (1) eingelegt wird.

11. Verfahren nach Anspruch 7, **dadurch gekennzeichnet, dass** die Einlage (5) im Fluss in den Gärgutträger (1) eingelegt wird.

12. Verfahren nach Anspruch 11, **dadurch gekennzeichnet, dass** die Einlage (5) nach oder beim Einlegen von der Papierrolle abgeschnitten wird.

13. Verfahren nach einem der Ansprüche 7 bis 12, **dadurch gekennzeichnet, dass** der Gärgutträger (1) nach dem Einlegen der Einlage (5) der Beladung mit Gärgut zugeführt wird.

## Claims

1. Carrier (1) which is intended for fermenting dough products and has a sheet-like insert (5), wherein the carrier (1) is provided with a base (2) and the insert (5), which is inserted into the carrier (1), rests on the base (2), for accommodating the fermentation products on the insert (5), **characterized in that** the insert (5) consists of paper, wherein the paper is air-permeable, absorbent and exhibits wet strength, and the insert (5) is a disposable article and rests loosely on the base (2), wherein the specific weight of the insert (5) is 30 to 100 g/m².

2. Carrier with insert according to Claim 1, **characterized in that** the insert (5), which rests on the base (2), is provided in sub-regions, in particular peripheral regions, on its underside with means for the non-slip positioning of the insert (5) in relation to the base (2), in particular the insert (5) is provided on its underside with an adherence coating.

3. Carrier with insert according to Claim 1 and 2, **characterized in that** the specific weight of the insert (5) is 50 to 80 g/m², in particular 60 to 70 g/m².

4. Carrier with insert according to one of Claims 1 to 3, **characterized in that** the paper is safe for food.

5. Carrier with insert according to one of Claims 1 to 4, **characterized in that** the paper is a crêpe paper.

6. Carrier with insert according to one of Claims 1 to 5, **characterized in that** the base (2) is rectangular and the dimensions of the insert (5) correspond essentially to the inner dimensions of the box in the region of the base (2).

7. Method for loading a carrier (1) which is intended for fermenting dough products and has an insert (5), **characterized by** the following method steps:
- supplying a carrier (1),
- removing an insert (5), which consists of air-permeable, absorbent and wet-strength paper and has a specific weight of 30 to 100 g/m², from a stack of stacked inserts or cutting an insert (5), which consists of air-permeable, absorbent and wet-strength paper and has a specific weight of 30 to 100 g/m², from a paper roll,
- loosely inserting the insert (5) into the carrier (1).

8. Method according to Claim 7, **characterized in that** some or all of the method steps proceed automatically.

9. Method according to Claim 7 or 8, **characterized in that** the carrier (1) is separated prior to being supplied.

10. Method according to Claims 7 to 9, **characterized in that** the insert (5) is removed from the stack of stacked inserts, and inserted into the carrier (1), by means of a suction-type lifting means.

11. Method according to Claim 7, **characterized in that** the insert (5) is inserted into the carrier (1) while operation is underway.

12. Method according to Claim 11, **characterized in that** the insert (5) is cut off from the paper roll following or during insertion.

13. Method according to one of Claims 7 to 12, **characterized in that** the carrier (1) is supplied for loading with fermentation products once the insert (5) has been inserted.

## Revendications

1. Support de cuisson (1) pour pâtons à cuire, présentant une garniture (5) en forme de feuille,
le support de cuisson (1) étant doté d'un fond (2) et la garniture (5) placée dans le support de cuisson (1) reposant sur le fond (2),
en vue de la réception du produit à cuire sur la garniture (5),
**caractérisé en ce que**
la garniture (5) est constituée de papier, le papier étant perméable à l'air, absorbant et résistant à l'humidité,
**en ce que** la garniture (5) est un article à usage unique et repose lâchement sur le fond (2),
le poids spécifique de la garniture (5) étant compris entre 30 et 100 g/m².

2. Support de cuisson à garniture selon la revendication 1, **caractérisé en ce que** la garniture (5) reposant sur le fond (2), sur la face inférieure, est dotée, au niveau de parties, en particulier de bordures, de moyens qui permettent de placer la garniture (5) sans qu'elle glisse par rapport au fond (2) et **en ce que** la garniture (5) est dotée d'un revêtement adhésif, en particulier sur sa face inférieure.

3. Support de cuisson à garniture selon la revendication 1 ou 2, **caractérisé en ce que** le poids spécifique de la garniture (5) est compris entre 50 et 80 g/m² et en particulier entre 60 et 70 g/m².

4. Support de cuisson à garniture selon l'une des revendications 1 à 3, **caractérisé en ce que** le papier n'est pas nocif pour les produits alimentaires.

5. Support de cuisson à garniture selon l'une des revendications 1 à 4, **caractérisé en ce que** le papier est un papier crêpé.

6. Support de cuisson à garniture selon l'une des revendications 1 à 5, **caractérisé en ce que** le fond (2) est rectangulaire et **en ce que** les dimensions de la garniture (5) correspondent essentiellement aux dimensions intérieures du caisson au niveau du fond (2).

7. Procédé de placement d'une garniture (5) sur un support de cuisson (1) pour pâtons à cuire, **caractérisé par** les étapes qui consistent à :
- amener un support de cuisson (1),
- prélever une garniture (5) constituée d'un papier perméable à l'air, absorbant et résistant à l'humidité et d'un poids spécifique de 30 à 100 g/m² dans une pile de garnitures empilées ou découper une garniture (5) constituée d'un papier perméable à l'air, absorbant et résistant à l'humidité et d'un poids spécifique de 30 à 100 g/m² dans un rouleau de papier et
- poser lâchement la garniture (5) dans le support de cuisson (1).

8. Procédé selon la revendication 7, **caractérisé en ce que** les étapes du procédé se déroulent de manière partiellement ou complètement automatique.

9. Procédé selon la revendication 7 ou 8, **caractérisé en ce que** le support de cuisson (1) est séparé avant d'être amené.

10. Procédé selon les revendications 7 à 9, **caractérisé en ce que** la garniture (5) est prélevée au moyen d'un système de saisie à aspiration dans une pile de garnitures empilées et est placée dans le support de cuisson (1).

11. Procédé selon la revendication 7, **caractérisé en ce que** la garniture (5) est placée "au vol" dans le support de cuisson (1).

12. Procédé selon la revendication 11, **caractérisé en ce que** la garniture (5) est découpée dans le rouleau de papier avant ou après avoir été placée.

13. Procédé selon l'une des revendications 7 à 12, **caractérisé en ce que** le support de cuisson (1) est amené au poste de chargement de produits de cuisson après que la garniture (5) y a été placée.
